(19) Europäisches Patentamt
European Patent Office
Office européen des brevets

(11) **EP 2 662 398 B1**

(12) **EUROPÄISCHE PATENTSCHRIFT**

(45) Veröffentlichungstag und Bekanntmachung des Hinweises auf die Patenterteilung:
**16.07.2014   Patentblatt 2014/29**

(51) Int Cl.:
***C08G 75/23*** *(2006.01)*

(21) Anmeldenummer: **12167740.5**

(22) Anmeldetag: **11.05.2012**

(54) **Verfahren zur Herstellung von Polysulfonen und Polysulfone**

Method for producing polysulfones and polysulfones

Procédé de fabrication de polysulfones ainsi que polysulfones

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**13.11.2013   Patentblatt 2013/46**

(73) Patentinhaber: **EMS-PATENT AG**
**7013 Domat / Ems (CH)**

(72) Erfinder:
• **Liedloff, Hanns-Jörg**
**7013 Domat/Ems (CH)**

• **Bayer, Andreas**
**7013 Domat/Ems (CH)**
• **Dübon, Pierre**
**7000 Chur (CH)**

(74) Vertreter: **Pfenning, Meinig & Partner GbR**
**Patent- und Rechtsanwälte**
**Theresienhöhe 13**
**80339 München (DE)**

(56) Entgegenhaltungen:
**EP-A1- 2 189 487          EP-A2- 0 347 669**
**WO-A1-2010/112508**

**Beschreibung**

Die vorliegende Erfindung betrifft ein verbessertes Verfahren zur Herstellung von Polysulfonen, insbesondere zur Herstellung von Polyethersulfonen (PESU) und Polyphenylensulfonen (PPSU) wobei das Lösungsmittel N-Methylpyrrolidon (NMP) oder/und N-Ethylpyrrolidon (NEP) ist. Ebenso sind die hergestellten Polysulfone, die eine erhöhte Glasübergangstemperatur aufweisen, hieraus hergestellte Formkörper und Verwendungszwecke Gegenstand der Erfindung.

Polysulfone gehören zu den thermoplastischen Hochleistungskunststoffen und finden vielseitige Verwendung in unterschiedlichen Bereichen wie beispielsweise Fahrzeugbau, Medizintechnik, Elektronik, Luftfahrt und Membrantechnologie. Eine Übersicht der Verwendungsmöglichkeiten dieser Polymerklasse bietet der 2008 in Ausgabe 10 auf den Seiten 113 bis 116 der Zeitschrift "Kunstoffe" gedruckte Artikel von N. Inchaurondo-Nehm.

Die seit den 1960er Jahren bekannten Verfahren zu ihrer Herstellung sehen die Umsetzung einer aromatischen Dihydroxyverbindung mit einer Dichlordiarylsulfonkomponente in Gegenwart einer Base vor. Im Laufe der Jahre wurden die Herstellverfahren kontinuierlich weiterentwickelt, als besonders geeignetes Lösungsmittel hat sich NMP erwiesen. Alternativ kann auch NEP und ggf. ein anderes N-alkyliertes Pyrrolidon eingesetzt werden. NMP oder/und NEP erfordern den Einsatz von Kalium-, Natrium- oder Calciumcarbonat als Base. Bevorzugt ist dabei Kaliumcarbonat (Pottasche). Ein besonderer Vorteil der Kombination dieser N-alkylierten Pyrrolidone mit den Carbonaten besteht darin, dass die Umsetzung der aromatischen Dihydroxyverbindung mit der Dichlordiarylsulfonkomponente einstufig erfolgt und der apparatetechnische Aufwand für die Polykondensation vergleichsweise gering gehalten werden kann.

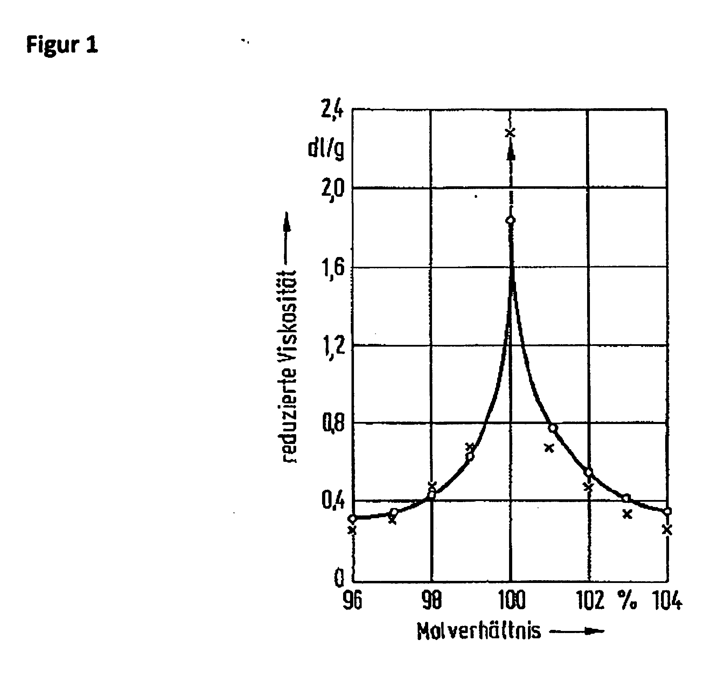

Der äquimolare Umsatz der aromatischen Dihydroxyverbindung mit der Dichlorarylsulfonverbindung führt, wie schon die rein theoretische Betrachtung erwarten lässt, zu Polymeren mit sehr hohen Viskositätszahlen, die auf Grund ihrer Eigenschaften für den Einsatz in der Praxis absolut ungeeignet sind. Ein grosser Überschuss einer der Komponente führt hingegen zu Produkten mit einer sehr kleinen Viskositätszahl (siehe dazu auch Figur 1, die dem Kunststoff Handbuch, Technische Thermoplase, Band 3, Hochleistungskunststoffe von 1994, entnommen wurde) und schlechten mechanischen Eigenschaften.

Figur 1: Abhängigkeit der Viskositätszahl vom Molverhältnis der Edukte.

Darum wurden in der jüngeren Vergangenheit in der Industrie Verfahren zur Herstellung von Polysulfonen etabliert, die den Einsatz zumindest einer der genannten Komponenten im geringen Überschuss vorsehen.

Eine Reihe von kommerzialisierten Produkten wie z.B. das PESU Radel A304P oder das PPSU Radel R-5000 NT werden nach Verfahren hergestellt, die einen Überschuss der Dichlorphenylsulfonkomponente, meist Dichlordiphenylsulfon (=DCDPS), verwenden. Das zur Herstellung dieser Produkte DCDPS im Überschuss eingesetzt wurde, ergibt sich aus dem mit ca. 0.3 Gewichtsprozent relativ hohen Chlorgehalt dieser Polysulfone und den daraus berechneten Konzentrationen an Chlorphenyl- oder Chlorendgruppen, welche mehr als 80 mmol/kg Polymer betragen. In Übereinstimmung mit dem hohen Anteil an Chlorendgruppen dieser Radel-Typen betragen ihre Hydroxyphenyl- oder Hydroxyendgruppen-Konzentrationen weniger als 20 mmol/kg Polymer. Die Bestimmung dieser phenolischen OH-Gruppen erfolgte nach der von A.J. Wnuk; T.F. Davidson und J.E. McGrawth in Journal of Applied Polymer Science; Applied Polymer Symposium 34; 89-101 (1978) beschriebenen Methode. Wegen der vergleichsweise niedrigen Hydroxyendgruppen-Konzentrationen wird bei den Radel-Typen auf die Alkylierung der Hydroxylgruppen mit Methylchlorid oder anderen Alkylhalogeniden verzichtet. Dies wurde durch $^1$H-NMR-spektroskopische Untersuchungen an Lösungen dieser Polysulfone in CDCl$_3$ (Gerät: 400 MHz-Spektrometer der Fa. Bruker) verifiziert, die Methode wird weiter unten detailliert erläutert.

Im Unterschied zu den Radel A- und -R-Typen wird bei der Herstellung der handelsüblichen PESU- und PPSU-Typen Ultrason E und Ultrason P (wie in WO2010/112508 A1 beschrieben) DCDPS im Unterschuss eingesetzt. Der daraus resultierende Überschuss der zweiwertigen Phenole 4,4'-Dihydroxydiphenylsulfon (Bisphenol S) bzw. 4,4'-Biphenol (4,4'-Dihydroxydiphenyl = DHDP) macht eine Methylierung notwendig, wie die in der folgenden Tabelle aufgeführten Ergebnisse von Endgruppen-Analysen zeigen.

**Tabelle 1*: Endgruppen handelsüblicher Polysulfone.**

| Typ | Polymer | Endgruppenkonzentrationen [mmol/kg] | | | Chlorgehalt [ppm] | Viskositätszahl [ml/g] |
|---|---|---|---|---|---|---|
| | | Chlorphenyl- | Hydroxy phenyl- | Methoxyphenyl- | | |
| Radel A304P NT | PESU | 90 | 15 | ---- | 3200 | 51 |

(fortgesetzt)

| Typ | Polymer | Endgruppenkonzentrationen [mmol/kg] | | | Chlorgehalt [ppm] | Viskositätszahl [ml/g] |
|---|---|---|---|---|---|---|
| | | Chlorphenyl- | Hydroxy phenyl- | Methoxyphenyl- | | |
| Radel A704P NT | PESU | 106 | 26 | ---- | 3800 | 42 |
| Ultrason E2020P | PESU | 42 | 7 | 72 | 1500 | 56 |
| Radel R 5000 NTa | PPSU | 86 | 15 | ---- | 3200 | 71 |
| Ultrason P 3010b | PPSU | 141 | 7.5 | 29 | 5000 | 67 |
| Ultrason P 3010c | PPSU | 17 | 8 | 112 | 600 | 67 |

*: *Die Bestimmung der Endgruppenkonzentrationen, des Chlorgehalts und der Viskositätszahl erfolgte nach den weiter unten beschriebenen Methoden, a) $T_g$: 220°C gemäss Datenblatt des Herstellers; b) (Chargennummer des analysierten PPSU: 0245576770), $T_g$: 223°C bestimmt wie unten angegeben; c) wie in der WO2010/112508 A1 beschrieben.*

Der Vorteil der Verfahren, die einen DCDPS-Überschuss vorsehen besteht darin, dass auf einen Reaktionsschritt, nämlich die Alkylierung von Hydroxyphenyl-Endgruppen - gewöhnlich mit dem als carcinogen eingestuften Methylchlorid - verzichtet werden kann und dadurch die Material- und Verfahrenskosten reduziert werden können. Ein Nachteil dieser Verfahren besteht in ihrer geringeren Toleranz für Prozessunterbrüche. Konkret besteht der Nachteil darin, dass die salzhaltigen, im Reaktor befindlichen, d.h. noch nicht durch Filtration von den Feststoffen befreiten Polymerlösungen bei verlängerten Verweilzeiten im Reaktor zu Zunahmen der Viskosität und des Molekulargewichts neigen. Bei ausreichend langer Verweildauer im Reaktor entstehen unabhängig davon, ob die Produkte methyliert werden oder auf den Methylierungsschritt verzichtet wird, (siehe VB4 und VB5) extrem hochviskose Polymere, die für jede der oben beschriebenen Anwendungen völlig unbrauchbar sind, so dass ein nach heutigem Kenntnisstand nicht mehr kompensierbarer Materialverlust entsteht.

Das in der WO 2010/112508 A1 beschriebene Verfahren zur Herstellung von Polybiphenylsulfonpolymeren löst das oben angesprochene Problem mit der Kontrolle der Viskositätszahl durch Verwendung eines leichten Überschusses der aromatischen Dihydroxyverbindung. Als Lösungsmittel findet NMP und als Base Kaliumcarbonat Verwendung. Ausserdem wird explizit darauf hingewiesen, dass eine Reaktionsführung ohne zusätzliches Schleppmittel möglich ist, wenn NMP als Lösungsmittel verwendet wird.

Die ältere EP 0135 130 A2 beschreibt ein Verfahren zur Herstellung von Polyethern durch Polykondensation von im wesentlichen äquivalenten Mengen von 2,2-Bis-(4-oxyphenyl)-propan, das teilweise durch weitere Biphenole ersetzt sein kann, mit Bis-(4-chlorphenyl)-sulfon, das teilweise durch weitere Dihalogenbenzolverbindungen ersetzt sein kann. Diese Schrift lehrt den Fachmann zunächst die Bisphenole mit Kaliumcarbonat vorzubilden und nach destillativem Entfernen des Wassers die Bishalogenverbindung zuzuführen und die Polykondensation durchzuführen. Gemäß der Offenbarung dieser Schrift sind Azeotropbildner nicht erforderlich, für Toluol als Schleppmittel wird anhand experimenteller Daten ein negativer Effekt auf die Reaktionsgeschwindigkeit und die Viskositätszahl gezeigt.

Auch die ältere EP 0 347 669 A2 beschreibt ein Verfahren zur Herstellung von hochmolekularen, aromatischen Polyethersulfonen aus Diphenolen und Dihalogenarylen, das den Einsatz der Edukte in äquimolaren Mengen vorsieht.

Des Weiteren ist das in der EP 0 347 669 A2 beschriebene Verfahren dadurch gekennzeichnet, dass man N-alkylierte Säureamide als Lösungsmittel einsetzt und damit gleichzeitig das bei der Reaktion entstehende Wasser azeotrop entfernt. Diese Schrift lehrt die Verwendung von N-alkylierten Säureamiden selbst als Azeotropbildner.

Zudem beschreibt die CA 847963 A die Verwendung von Sulfoxiden und/oder Sulfonen als Lösungsmittel bei der Herstellung von Polyarylsulfonen.

Verfahren, die einen Überschuss der aromatischen Dihydroxyverbindung vorsehen, führen zu Produkten welche im Unterschied zu den DCDPS-geregelten Polysulfonen auf Grund ihrer hohen Hydroxyphenylendgruppenkonzentration zur Stabilisierung bevorzugt alkyliert werden. Dazu wird in der Praxis eine hohe Menge des akut toxischen (MAK

= 50 ml/m$^3$) und als carcinogen eingestuften Methylchlorids verwendet.

Die genannten Verfahren aus dem Stand der Technik weisen unabhängig davon in welchem Verhältnis die aromatische Dihydroxy- und die aromatische Dichlorsulfonverbindung eingesetzt werden folgenden gemeinsamen Nachteil auf:

Die durch den Stand der Technik belegte bevorzugte Durchführung der Polykondensation von Polysulfonen [PESU, PPSU und Polysulfon (auf Basis DCDPS und Bisphenol A)] in Abwesenheit eines Schleppmittels zum Abtrennen des während der Umsetzung entstehenden Wassers hat eine übermäßig lange Reaktionsdauer zur Folge, die sich nachteilig auf die Produktivität und Dimensionierung der Polykondensationsreaktoren auswirkt und die Wirtschaftlichkeit des Verfahrens vermindert. Zudem weisen die derart hergestellten Polysulfone nur unzulängliche thermische Stabilitäten auf.

Es war daher die Aufgabe der vorliegenden Erfindung ein verbessertes Herstellungsverfahren für Polysulfonpolymere zur Verfügung zu stellen, das die Nachteile aus dem Stand der Technik überwindet. Zum Einen soll das oben beschriebene Aufbauphänomen durch eine geeignete Massnahme unterdrückt werden. Zum Anderen ist es Aufgabe der Erfindung den Bedarf an toxischem Methylchlorid zu reduzieren. Ebenso war es Aufgabe der vorliegenden Erfindung, Polysulfone mit verbesserten thermischen Eigenschaften, insbesondere erhöhten Glasübergangstemperaturen anzugeben.

Diese Aufgabe wird bezüglich eines Herstellungsverfahrens mit den Merkmalen des Patentanspruchs 1, bezüglich eines Polysulfons mit den Merkmalen des Patentanspruchs 16, bezüglich einer thermoplastischen Formmasse bzw. eines Formkörpers mit den Merkmalen der Patentansprüche 18 bzw. 19 sowie bezüglich Verwendungsmöglichkeiten der Polysulfone mit den Merkmalen des Patentanspruchs 20 gelöst, dabei stellen die abhängigen Patentansprüche jeweils vorteilhafte Weiterbildungen dar.

Das erfindungsgemäße Verfahren erlaubt die Herstellung von Polysulfonpolymeren, bei dem eine Komponente A, enthaltend zumindest eine aromatische Dihydroxyverbindung, ausgewählt aus der Gruppe bestehend aus 4,4'-Dihydroxybiphenyl und/oder Bisphenol S mit einer Komponente B, enthaltend mindestens ein Bis-(halogenaryl)sulfon, bevorzugt 4,4'-Dichlordiphenylsulfon, in Gegenwart einer Base, die mit dem Reaktionsgemisch unter Bildung von Wasser reagiert, umgesetzt wird, wobei

> 0.99 bis < 1.01 Äquivalente der Komponente A bezogen auf 1.0 Äquivalente der Komponente B eingesetzt werden,
die Umsetzung in einem Lösungsmittel, umfassend N-alkylierte Pyrrolidone durchgeführt wird,
diesem Reaktionsgemisch von 0 bis 12 Gewichtsprozent bezogen auf das Gesamtgewicht der Komponenten A und B, der Base und des Lösungsmittels von zumindest einem Schleppmittel mit einem Siedepunkt von größer als 130°C zugesetzt wird, und
vor oder während der Umsetzung der Komponente A mit Komponente B mindestens ein Regler (Komponente D) zugegeben wird, der ein einwertiges Phenol ist.

Zum mechanistischen Ablauf der Reaktion besteht die Vorstellung, dass die Base zunächst durch Deprotonierung die Dihydroxyverbindung (Komponente A) aktiviert. Nach Substitution der Chloratome der Dichlorverbindung (Komponente B) durch das Anion von Komponente A entsteht formell Chlorwasserstoff, welcher durch die Base unter Bildung des entsprechenden Salzes und Wasser neutralisiert wird. Beim Einsatz von z.B. Pottasche als Base entstehen dabei Kohlensäure, die in Wasser und Kohlenstoffdioxid zerfällt, und Kaliumchlorid.

Das entstandene Wasser wird dabei in einer bevorzugten Ausführungsform unter Verwendung eines Schleppmittels destillativ aus dem Reaktionsgemisch entfernt. Unter einem Schleppmittel wird dabei bevorzugt ein Stoff verstanden, der mit Wasser ein Azeotrop bildet und es ermöglicht das Wasser aus dem Gemisch herauszuschleppen. Das Schleppmittel ist dabei stofflich vom Lösungsmittel verschieden. Bevorzugt stellt das Schleppmittel kein Lösungsmittel für das hergestellte Polysulfon dar, während das Lösungsmittel keinen Schleppmittelcharakter aufweist.

Es wurde festgestellt, dass Polysulfonpolymere im für die technische Verwendung brauchbaren Viskositätszahlenbereich erhalten werden, wenn Komponenten A und B äquimolar - d.h. im oben definierten Verhältnis - eingesetzt werden und ein Regler (Komponente D), der ein einwertiges Phenol ist zugesetzt wird.

Im Rahmen der Untersuchungen zur vorliegenden Erfindung, wurde das oben diskutierte aus der theoretischen Betrachtung erwartete Verhalten für den äquimolaren Umsatz der aromatischen Dihydroxykomponente mit der Dichlorarylsulfonkomponente bestätigt. Die erhaltenen Polymere weisen für den Einsatz in der Praxis unbrauchbar hohe Viskositätszahlen auf (siehe auch Vergleichsbeispiel 1 (VB1)).

Weiterhin konnte völlig überraschenderweise ein Anstieg der Glasübergangstemperatur der gemäß dem Verfahren hergestellten Polysulfone, gegenüber den aus dem Stand der Technik bekannten Polysulfonpolymeren beobachtet werden.

Überraschend war weiterhin, dass wenn als Komponente D eine Monochlorarylkomponente verwendet wird, die hergestellten Polysulfone einen deutlichen Molekulargewichtsaufbau aufweisen (VB6), der sich äussert negativ auf die Verwendung der Produkte auswirkt. Die Wahl des Reglers ist also wider Erwarten entscheidend für die Qualität der erhaltenen Produkte

Eine bevorzugte Ausführungsform des Verfahrens sieht vor, dass der eingesetzte Regler, i.e. die Komponente D ein einwertiges Phenol mit einem pKa-Wert des phenolischen Protons von <12, bevorzugt <11, besonders bevorzugt <10, ist, wobei das Phenol insbesondere ausgewählt ist aus der Gruppe bestehend aus 4-Phenyl-phenol, 4-tert-Butylphenol, 4-Tritylpenol, ortho-Kresol, meta-Kresol, para-Kresol, 2,3-Dimethylphenol, 2,4-Dimethylphenol, 2,5-Dimethylphenol, 2,6-Dimethylphenol, 3,4-Dimethylphenol, 3,5- Dimethylphenol, Mesitol, Tymol, para-Amylphenol, ortho-Amylphenol, meta-Amylphenol, para-Isopropylphenol, meta-Isopropylphenol, ortho-Isopropylphenol, para-n-Butylphenol, ortho-n-Butylphenol, meta-n-Butylphenol, para-n-Heptylphenol, para-n-Heptylphenol, meta-n-Heptylphenol para-n-Octylphenol, ortho-n-Octylphenol , meta-n-Octylphenol, para-n-Nonylphenol, ortho-n-Nonylphenol, meta-n-Nonylphenol, para-n-Dodecylphenol, meta-n-Dodecylphenol, ortho-n-Dodecylphenol, 5-Indanol, 1-Hydroxynaphthalin und/oder 2-Hydroxynaphthalin.

Ebenso sind Mischungen aus 2 oder mehreren der zuvor genannten Phenole einsetzbar.

Besonders bevorzugt ist dabei, dass 30-90 μmol Regler (Komponente D), bevorzugt 40-70 μmol, besonders bevorzugt zu 45-60 μmol von Komponente D (Regler) eingesetzt werden, wobei die Mengenangaben in μmol Regler auf g entstehendes Polymer zu verstehen sind.

Bevorzugt wird die Reaktion unter Verwendung eines Schleppmittels auf Basis von Alkylaromaten, insbesondere Alkylbenzolen durchgeführt.

Bevorzugt wird ferner während und/oder nach der Umsetzung der Komponente A mit Komponente B eine teilweise oder vollständige Entwässerung des Reaktionsgemisches, vorzugsweise durch azeotrope Destillation des Wassers zusammen mit dem Schleppmittel durchgeführt.

Von den Erfindern wurde festgestellt, dass insbesondere Alkylbenzole, welche einen Siedepunkt von grösser als 130°C besitzen, eine ausgezeichnete Schleppmittelfunktion aufweisen. Sie verkürzen die Reaktionszeiten signifikant und erhöhen somit die Wirtschaftlichkeit des Verfahrens. Angesichts der negativen Ergebnisse aus dem Stand der Technik mit dem einfachsten Alkylbenzol Toluol (Siedepunkt 111°C) sind diese Erkenntnisse äusserst überraschend.

Bevorzugte Schleppmittel sind ausgewählt aus der Gruppe bestehend aus ortho-Xylol, meta-Xylol, para-Xylol, Mischungen der Xylolisomeren, technisches Xylol, Ethylbenzol, 1,3,5-Trimethylbenzol, 1,2,4-Trimethyl-benzol und/oder Mischungen daraus. Besonders bevorzugt ist technisches Xylol, worunter eine z.B. in Reforming- oder Steamcracker-Prozessen anfallende Mischung der Xylolisomeren, die daneben Ethylbenzol enthält verstanden wird. Es sei darauf hingewiesen, dass die Löslichkeit der Polysulfonpolymere sowie der Edukte zu Ihrer Herstellung in den Schleppmitteln sehr gering ist und diese daher im Sinne der vorliegenden Erfindung nicht als Lösungsmittel zu verstehen sind. Außerdem weisen die als Lösungsmittel hervorragend geeigneten N-Alkylpyrrolidone, nur eine ungenügende Schleppmittelfunktion auf und sind im Sinne der vorliegenden Erfindung keinesfalls als Schleppmittel zu verstehen.

Eine nicht beschränkende Auswahl von Alkylaromaten, gemäß der vorliegenden Erfindung, ist in der folgenden Tabelle zusammen mit ihren Siedetemperaturen aufgeführt.

**Tabelle 2: Auswahl an Schleppmitteln gemäß der vorliegenden Erfindung.**

| Schleppmittel | Siedetemperatur [°C] |
|---|---|
| o-Xylol (1,2-Dimethylbenzol) | 144 |
| m-Xylol (1,3-Dimethylbenzol) | 139 |
| p-Xylol (1,4-Dimethylbenzol) | 138 |
| Ethylbenzol | 136 |
| Mischung aus o-, m- und p-Xylol und Ethylbenzol*) | 138.5 |
| Cumol = Isopropylbenzol | 152 |
| Pseudocumol = 1,2,4-Trimethylbenzol | 169 |
| Mesitylen = 1,3,5-Trimethylbenzol | 165 |
| *) Derartige Mischungen werden aus dem Pyrolysebenzin (aus Steamcracker-Prozessen) oder aus Reformatbenzin (aus Reforming-Prozessen) isoliert und werden im Folgenden als technisches Xylol bezeichnet. | |

Diese bevorzugte Ausführungsform ermöglicht eine effizientere Prozessführung durch teilweise oder vollständige Entfernung des bei der Umsetzung der Komponente A mit der Komponente B entstehenden Wassers, vorzugsweise durch Abdestillation, vom Reaktionsgemisch und dem darin enthaltenen, entstehenden oder entstandenen Polysulfons. Das während der Reaktion entstehende Wasser, kann zusammen mit dem Schleppmittel aus dem Reaktionsgemisch entfernt werden, vorzugsweise durch Destillation des Azeotrops. Dabei ist eine teilweise, bevorzugt vollständige Entfernung des entstandenen Reaktionswassers aus dem Reaktionsgemisch realisierbar.

Unter "vollständiger" Wasserentfernung wird dabei verstanden, dass mehr als 95% des gebildeten Reaktionswassers abgetrennt werden, bevorzugt mehr als 98%. In diesem Zusammenhang wird bei der an dieser Stelle erfolgenden teilweisen oder vollständigen Entfernung des Schleppmittels von "Entwässerung" gesprochen. Für den Fall, dass lediglich ein Teil des Schleppmittels entfernt, beispielsweise abdestilliert wird, kann das restliche bzw. überschüssige Schleppmittel zu einem späteren Zeitpunkt noch aus dem Reaktionsgemisch, beispielsweise ebenso durch Destillation abgetrennt werden.

In einer besonders bevorzugten Ausführungsform wird das Schleppmittel im Kreislauf geführt. Wasser und das Schleppmittel trennen sich im Kondensat und bilden eine Phasengrenze aus, das Wasser kann beispielsweise über einen Wasserabscheider außerhalb des Reaktors, in dem die Umsetzung aus Komponente A und Komponente B durchgeführt wird, separiert werden. Mit dem abgetrennten Wasser wird dabei meist auch ein geringer Teil des Schleppmittels aus dem Reaktionsgemisch entfernt.

Die Menge des Schleppmittels beträgt 0 bis 12 Gewichtsprozent, bevorzugt 4 bis 10 Gewichtsprozent und besonders bevorzugt 6 bis 9 Gewichtsprozent, bezogen auf das Gesamtgewicht aller Komponenten, einschliesslich des Lösungsmittels und der Base.

Komponente A besteht im Sinne der vorliegenden Erfindung aus mindestens einer aromatischen Dihydroxyverbindung und umfasst mindestens 4,4'-Dihydroxy-biphenyl und/oder Bisphenol S, wobei 4,4'-Dihydroxybiphenyl bevorzugt ist. Darüberhinaus kann Komponente A weitere Verbindungen, wie z.B. Dihydroxybiphenyle, insbesondere 2,2'-Dihydroxy-biphenyl; weitere Bisphenylsulfone, insbesondere Bis(3-hydroxyphenylsulfon); Dihydroxybenzole, insbesondere Hydrochinon und Resorcin; Dihydroxynaphthaline, insbesondere 1,5-Dihydroxynaphthalin, 1,6-Dihydroxynaphthalin und 1,7-Dihydroxynaphthalin; Bisphenylether, insbesondere Bis(4-hydroxyphenyl)ether und/oder Bis(2-hydroxyphenyl)ether; Bis-phenylsulfide, insbesondere Bis(4-hydroxyphenyl)sulfid; Bisphenylketone, insbesondere Bis(4-hydroxyphenyl)keton; Bisphenylmethane, insbesondere Bis(4-hydroxyphenyl)methan; Bisphenylpropane; insbesondere 2,2-Bis(4-hydroxyphenyl)propan (Bisphenol A); Bisphenylhexafluorpropane, insbesondere 2,2-Bis(3,5-dimethyl-4-hydroxyphenyl)hexafluorpropan; und/oder Mischungen daraus enthalten.

In einer Ausführungsform der vorliegenden Erfindung enthält Komponente A mindestens 50 Gewichtsprozent 4,4'-Dihydroxybiphenyl oder mindestens 50 Gewichtsprozent Bisphenol S, bevorzugt sind mindestens 80 Gewichtsprozent 4,4'-Dihydroxybiphenyl oder Bisphenol S in Komponente A enthalten, in einer besonders bevorzugten Ausführungsform ist Komponente A 4,4'-Dihydroxybiphenyl oder Bisphenol S.

Die eingesetzte Komponente B enthält im Sinne der vorliegenden Erfindung in einer besonders bevorzugten Ausführungsform (4,4'-Dichlordiphenylsulfon, die zusätzliche Verwendung anderer Dihalogenarylsulfonverbindungen oder der Ersatz von 4,4'-Dichlordiphenylsulfon durch andere Dihalogenarylsulfonverbindungen stehen ebenfalls im Einklang mit der Erfindung.

Die Umsetzung von Komponente A und B erfolgt bevorzugt zwischen 80 und 250°C, weiter bevorzugt zwischen 100 und 220°C und besonders bevorzugt zwischen 150 und 210°C.

Die Umsetzung von Komponente A und B, ausgedrückt durch die Zeitspanne, in der Reaktionswasser entsteht, erfolgt vorzugsweise zwischen 1 und 6 Stunden, bevorzugt zwischen 1,5 und 5 Stunden und besonders bevorzugt zwischen 2 und 4 Stunden.

Weiter bevorzugt ist es, wenn > 0.995 bis < 1.05, bevorzugt > 0.999 bis < 1.001 Äquivalente der Komponente A bezogen auf 1.0 Äquivalente der Komponente B, insbesondere äquimolare Mengen an Komponente A und Komponente B eingesetzt werden.

Durch Reaktionsführung gemäß den Bedingungen des erfindungsgemäßen Verfahrens gelingt es Umsätze von grösser als 96 %, bevorzugt grösser als 98 % und besonders bevorzugt grösser als 98.5 % zu erhalten. Die Umsätze im Sinne der vorliegenden Erfindung beziehen sich auf den molaren Anteil der umgesetzten reaktiven Chlor- und Hydroxyendgruppen der Komponenten A und B.

Die Umsetzung der Komponenten A und B erfolgt bevorzugt in einem Lösungsmittel, welches hauptsächlich N-alkylierte Pyrrolidone umfasst. Besonders bevorzugt ist eine Variante, in der ausschliesslich NMP oder/und NEP als Lösungsmittel eingesetzt wird. Insbesondere bevorzugt ist eine Ausführungsform in der ausschliesslich NMP als Lösungsmittel verwendet wird.

Gemäß der vorliegenden Erfindung beträgt die Konzentration der Komponenten A und B im Lösungsmittel von 10 bis 60 Gewichtsprozent, bevorzugt von 15 bis 50 Gewichtsprozent und besonders bevorzugt von 20 bis 40 Gewichtsprozent.

Im Sinne der vorliegenden Erfindung erfolgt die Umsetzung von Komponente A mit Komponente B in Gegenwart einer Base. Diese Base hat den Zweck die aromatische Hydroxykomponente in die reaktivere Phenolatform überzuführen. Bevorzugte Basen sind Alkali- oder Erdalkalihydrogencarbonate, Alkali- oder Erdalkalicarbonate oder Mischungen der zuvor genannten Verbindungen, insbesondere Natriumcarbonat, Kaliumcarbonat und Calciumcarbonat, wobei Kaliumcarbonat besonders bevorzugt ist. In einer besonders bevorzugten Ausführungsform wird wasserfreies Kaliumcarbonat eingesetzt. Gemäß einer weiteren bevorzugten Ausführungsform wird wasserfreies Kaliumcarbonat mit einer Partikelgröße von kleiner als 250 μm eingesetzt. Es werden gemäß der vorliegenden Erfindung 1.0 bis 1.5 Äquivalente der Base, bevorzugt 1.005 bis 1.1 Äquivalente, insbesondere bevorzugt von 1.008 bis 1.05 Äquivalente der Base jeweils bezogen auf 1.0 Äquivalente von Komponente A verwendet.

Obwohl die reinen Polysulfone als sehr oxidationsstabile Verbindungen bekannt sind, gilt - wie die Erfinder festgestellt haben - für die Lösungen dieser Polymere in NMP oder einem anderen Lösungsmittel das genaue Gegenteil. Bereits durch Spuren von Sauerstoff werden die gelösten Polysulfone unter den Herstellungsbedingungen, d.h. bei Temperaturen von ca. 150 bis ca. 240°C; sehr rasch zu völlig unbrauchbaren, d.h. stark verfärbten und tiefviskosen Produkten abgebaut. Die Viskosität oxidativ geschädigter Polysulfone durchläuft zunächst ein Minimum, bevor im Extremfall Vernetzung zu weder fliessfähigen noch aufschmelzbaren Materialien eintritt. Daher ist die Durchführung der Polykondensation und aller Folgeschritte unter einer weitestgehend sauerstofffreien Inertgasatmosphäre zwingend erforderlich. Als Schutzgase haben sich Stickstoff und Argon mit einem Sauerstoffgehalt von weniger als 100 ppm, bevorzugt weniger als 10 ppm, insbesondere weniger als 1 ppm bewährt.

Eine bevorzugte Ausführungsform der vorliegenden Erfindung sieht während und/oder nach der Umsetzung der Komponenten A und B die ein- oder mehrmalige Umsetzung des Polysulfonpolymers mit mindestens einer aliphatischen Monohalogenverbindung (Komponente C) vor. Die noch vorhandenen Hydroxygruppen werden in diesem Reaktionsschritt verethert und das Polymer vor Auf- bzw. Abbaureaktionen geschützt. Außerdem wirkt sich dieser Reaktionsschritt positiv auf die Vergilbungseigenschaften des Polymers aus. Bevorzugt werden Alkylhalogenide und besonders bevorzugt Alkylchloride eingesetzt, d.h. während der Umsetzung mit Komponente C findet eine Alkylierung statt. In einer besonders bevorzugten Ausführungsform wird Methylchlorid als Komponente C eingesetzt.

Es ist bevorzugt die Umsetzung mit Komponente C vor dem destillativen Entfernen des überschüssigen Schleppmittels (Schleppmitteldestillation) durchzuführen.

Die Temperatur während der Umsetzung mit Komponente C beträgt gemäß der vorliegenden Erfindung zwischen 140 und 215°C, vorzugsweise zwischen 160 und 205°C, besonders bevorzugt zwischen 180 und 200°C. Komponente C kann kontinuierlich als Gasstrom zugeführt werden, aber auch stossweise aufgepresst werden. Sofern Komponente C in flüssiger Form eingesetzt wird erfolgt vorzugsweise eine kontinuierliche Zugabe. Die Umsetzung mit Komponente C wird zwischen 15 und 200 Minuten, bevorzugt zwischen 25 und 120 Minuten und besonders bevorzugt zwischen 30 und 60 Minuten durchgeführt.

Es hat sich als vorteilhaft erwiesen das, während der Umsetzung von Komponente A und B entstandene Kaliumchlorid nach beendeter Reaktion abzufiltrieren. Sofern eine Umsetzung mit Komponente C erfolgt, ist es vorteilhaft die Filtration erst nach diesem zweiten Reaktionsschritt durchzuführen. Die Filtration erfolgt nach Verdünnen des Reaktionsgemisches mit dem für die Umsetzung verwendeten Lösungsmittel auf das doppelte Volumen.

Die Prozessdauer liegt im Sinne der vorliegenden Erfindung für alle Polysulfone außer PESU (Bisphenol S als Dihydroxykomponente) unter 400 Minuten, vorzugsweise unter 350 Minuten und besonders bevorzugt unter 310 Minuten. Für PESU ist die Prozessdauer auf Grund der geringeren Reaktionsgeschwindigkeit etwas höher und beträgt unter 450 Minuten, vorzugsweise unter 410 Minuten und insbesondere bevorzugt unter 380 Minuten. Der Begriff Prozessdauer wird im experimentellen Teil erläutert und umfasst neben der Dauer der Umsetzung von Komponente A und B auch die Schritte der Methylierung und der destillativen Entfernung des überschüssigen Schleppmittels.

Die Viskositätzahlen der nach dem Verfahren der vorliegenden Erfindung hergestellten Polysulfone beträgt von 35 bis 85 ml/g, vorzugsweise von 42 bis 80 ml/g und besonders bevorzugt von 45 bis 70 ml/g, gemessen gemäß ISO 307 wie weiter unten detaillierter ausgeführt.

Das überschüssige Schleppmittel wird in einer bevorzugten Ausführungsform vor der Ausfällung des Polysulfons entfernt.

Die Ausfällung des erhaltenen Polysulfons kann im Rahmen der vorliegenden Erfindung nach den für diese Stoffklasse üblichen Techniken erfolgen. Das Fällungsmittel wird bevorzugt ausgewählt aus der Gruppe bestehend aus Wasser, Mischungen aus Wasser und NMP, Wasser und NEP und/oder Alkoholen mit 2-4 C-Atomen. Der Anteil des NMP oder NEP in den Mischungen mit Wasser beträgt bis zu 25 Gewichtsprozent. Besonders bevorzugt beträgt die Temperatur des Fällungsmittels 80°C, wenn die Fällung unter Normaldruck erfolgt. Bei höheren Drücken, wie sie durch die Gestaltung des für die Fällung verwendeten Apparats erzwungen werden können, liegt die Temperatur des Fällungsmittels höher als 100°C.

Weiterhin betrifft die vorliegende Erfindung ein Polysulfonpolymer, das gemäß dem zuvor beschriebenen Verfahren herstellbar ist.

Das erfindungsgemäße Polysulfonpolymer stellt dabei ein Polykondensat aus den Monomeren Komponente A und Komponente B dar, das an den Kettenenden unter anderem mit Gruppierungen, die von Komponente D herrühren, terminiert ist.

Im Gegensatz zu aus dem Stand der Technik bekannten Polysulfonen weisen die erfindungsgemäßen Polysulfone überraschend bessere thermische Eigenschaften auf, sie zeigen eine höhere Glasübergangstemperatur. Diese verbesserten Eigenschaften sind auf das erfindungsgemäße Herstellungsverfahren zurückzuführen.

Bevorzugte Polysulfonpolymere zeichnen sich durch eine Glasübergangstemperatur (Tg, gemessen gemäß nach ISO 11357 Teil 1 und 2 wie unten beschrieben) von mehr als 223 °C, bevorzugt mehr als 224 °C, besonders bevorzugt von 225 °C bis 230 °C aus.

Erfindungsgemäß wird ebenso eine thermoplastische Formmasse, enthaltend mindestens ein zuvor genanntes Polysulfonpolymer angegeben. Zudem stellt die Erfindung Formkörper, hergestellt aus einer erfindungsgemäßen thermoplastischen Formmasse, insbesondere in Form von Fasern, Filmen, Membranen oder Schäumen bereit. Die Erfindung betrifft ebenso Verwendungsmöglichkeiten eines erfindungsgemäßen Polysulfonpolymers oder einer erfindungsgemäßen thermoplastischen Formmasse zur Herstellung von Formkörpern, Fasern, Filmen, Membranen oder Schäumen.

Die vorliegende Erfindung wird anhand der folgenden Beispiele, welche die Erfindung illustrieren, aber nicht ihren Umfang einschränken sollen, näher erläutert.

Die in Tabelle 3 aufgeführten Materialien wurden in den Beispielen und Vergleichsbeispielen eingesetzt.

**Tabelle 3:** Eingesetzte Materialien.

| Stoff | Handelsname | Abkürzung | Hersteller |
|---|---|---|---|
| 4,4'-Dihydroxybiphenyl | 4,4'-Biphenol | DHDP | SI-Group; Newport, Tennessee, US |
| 4,4'-Dichlordiphenylsulfon | 4,4'-Dichlordiphenylsulfon | DCDPS | Ganesch Polychem. Ltd. Mumbai, India |
| 4-Phenylphenol | 4-Phenylphenol | ---- | Sigma Aldrich, Buchs, CH |
| 4-Chlordiphenylsulfon | 4-Chlordiphenylsulfon | ---- | Sigma Aldrich, Buchs, CH |
| Kaliumcarbonat | Kaliumcarbonat | ---- | EVONIK-Degussa GmbH, Lülsdorf, DE |
| Methylchlorid | Methylchlorid | MeCl | Sigma Aldrich, Buchs, CH |
| N-Methylpyrrolidon | N-Methylpyrrolidon | NMP | BASF AG, Ludwigshafen, DE |
| technisches Xylol[a)] | technisches Xylol | ---- | Total S.A., Courbevois, Paris |
| Toluol | Toluol | ---- | Sigma Aldrich, Buchs, CH |
| a) Ethylbenzolanteil von <20 %. | | | |

### Durchführung der analytischen Bestimmungen und Probenvorbereitung

### Probenvorbereitung

Zur Vorbereitung der während oder am Ende der Polykondensationen für die Durchführung der Analysen entnommenen Proben wurden diese mit einem grossen Überschuss Wasser bei einer Temperatur von 80°C zunächst gefällt, die resultierenden Polymerpartikel dann zweimal mit der 100-fachen Menge Wasser (2 l auf 20 g Polymer) bei 90°C für 3 Stunden extrahiert, bei 100°C im Vakuumtrockenschrank für 14 Stunden getrocknet und schliesslich für 16 Stunden in einem hohen Überschuss siedenden Methanols (500 ml auf 5 g Polymer) extrahiert und im Vakuum getrocknet.

### Bestimmung der Viskositätszahlen (VZ)

Die Bestimmung der Viskositätszahl in [ml/g] erfolgte gemäß ISO 307 bei 25°C an 1 %-igen Lösungen der Polymere in einem 1:1 Gemisch aus Phenol und ortho-Dichlorbenzol.

### Bestimmung der Hydroxyendgruppenkonzentrationen

Die Hydroxyendgruppen wurden gemäß der bereits vorne zitierten Methode von Wnuk et al. bestimmt.

Die Methoxyendgruppen wurden mittels $^1$H-NMR-Spektroskopie auf einem 400 MHz-Gerät der Firma Bruker bestimmt. Es wurden die Signale der aromatischen Protonen sowie das Signal für die Protonen der Methoxygruppe integriert, wobei die Summe des Integralwerts der aromatischen Protonen auf 16 gesetzt wurde. Die Methoxy-Endgruppen wurden dann anhand der folgenden Formel berechnet:

$$EG(Methoxy) = \frac{Integral(Methoxy) \times 1000000}{M \times 3}$$

mit

*EG (Methoxy):*      Methoxy-Endgruppen in $\mu$aeq/g
*Integral (Methoxy):*      Integral des Signals bei 3.85 ppm (Integral der aromatischen Protonen auf 16 gesetzt)
*M*:      Gewicht der Wiederhol-Einheit des Polysulfons in g/aeq (PPSU: 400 g/aeq, PESU: 464 g/aeq)

**Bestimmung des Chlorgehaltes**

Der Chlorgehalt wurde mittels Ionenchromatographie bestimmt. Zunächst wurden die Proben wie folgt vorbereitet:

Zur Bestimmung des Gesamtchlorgehalts wurde ein Aufschluss der Probe mit einem Sauerstoff-Aufschluss-Gerät der Fa. IKA durchgeführt. 100 mg der Probe wurden in eine Acetobutyrat-Kapsel eingewogen, mit Zünddraht versehen und mit den beiden Elektroden des Aufschluss-Geräts verbunden. Als Absorptions-Lösung wurden 10 ml 30%-iges Wasserstoffperoxid verwendet. Die Zündung erfolgte unter 30 bar Sauerstoff. Die Aufschluss-Lösung wurde filtriert, in Vials abgefüllt und schliesslich mit Ionenchromatographie auf Chlorid analysiert.

Zur Bestimmung des freien Chlorids wurden 2.0 g Probe in 50 ml Methanol/Wasser 1/1 über Nacht unter Rückfluss extrahiert. Die Extraktions-Lösung wurde filtriert, in Vials abgefüllt und mit Ionenchromatographie auf Chlorid analysiert.

Die Ionenchromatographie wurde mit folgenden Parametern durchgeführt:

Gerät:      ICS-90 (Fa. Dionex)
Säule:      IonPac AS12A Analytical Column (4 x 200 mm)
Eluent:      2.7 mM Natriumcarbonat, 0.3 mM Natriumhydrogencarbonat
Detektion:      Leitfähigkeits-Detektor
Fluss:      1 mL/Min.

Die Auswertung erfolgte mit der Methode des externen Standards. Dazu wurde aus 3 verschiedenen Chlorid-Lösungen bekannter Konzentration eine Kalibrierkurve ermittelt.

**Bestimmung der Chlorendgruppenkonzentrationen**

Die Chlorendgruppenkonzentrationen wurden nach der folgenden Formel über den Chlor-Gehalt berechnet:

$$EG(Chlor) = \frac{[Chlorid(gesamt) - Chlorid(frei)]}{35.5}$$

mit

*EG (Chlor):*      Chlor-Endgruppen in $\mu$aeq/g
*Chlorid (gesamt):*      Chlorid-Konzentration der Aufschluss-Lösung in ppm
*Chlorid (frei):*      Chlorid-Konzentration der Extraktions-Lösung in ppm.

**Bestimmung der Glasübergangstemperatur ($T_g$)**

Die Bestimmung der Glasübergangstemperatur erfolgte auf einem DSC 2920 (Differential Scanning Calorimeter) der Firma TA Instruments gemäss ISO-Norm 11357 Teil 1+2. Als Spülgas wurde Stickstoff und als Kalibriersubstanz Indium ($Smp_{Onset}$: 156.6°C, $\Delta$H: 28.71 J/g) verwendet. Es wurden 10 mg der Probe in einen Tiegel aus Aluminium eingewogen und dieser verschlossen. Die Probe wurde dann zunächst mit 20°C/Minute über den Schmelzpunkt der Probe, d.h. mindestens 10°C höher als das Ende des Schmelzvorgangs, aufgeheizt und nach einer Minute bei dieser Temperatur, mit 5°C/Minute auf Raumtemperatur abgekühlt. Anschliessend wurde erneut mit 20°C pro Minute über den Schmelzpunkt aufgeheizt und zur Bestimmung der Glasübergangstemperatur in festem Kohlendioxid abgeschreckt. Das Thermogramm wurde mit dem Programm Universal Analysis der Firma TA Instruments ausgewertet. Der Mittelpunkt des Glasübergangbereichs, welcher im Folgenden als $T_g$ angegeben wird, wurde nach der Methode "Half height" ermittelt. Zusätzlich wurde in den Beispielen die Temperatur am Onset angegeben.

**Beispiel 1** (**B-1,** äquimolarer Einsatz der Komponenten A und B, 4-Phenylphenol als Kettenregler, technisches Xylol als Schleppmittel und Methylierung)

In einem beheizbaren Autoklaven der Firma Büchi (Rührgefäss Typ 4, 2.0 l, Büchi AG, Uster) mit Rührer, Anschlüssen für Destillationsaufsätze, Rückflusskühler, Wasserabscheider und Inertgaszuleitung wurden unter Argonatmosphäre 127.3 g (0.684 mol) 4,4'-Dihydroxybiphenyl und 196.4 g (0.684 mol) 4,4'-Dichlordiphenylsulfon (Molverhältnis DHDP:DCDPS = 1.000:1.000) sowie 2.33 g 4-Phenylphenol (0.0137 mol) in 695 ml NMP gelöst und unter Einwirkung von 95.48 g (0.6909 mol) dispergiertem, besonders feinteiligem Kaliumcarbonat in Gegenwart von 90 g technischem Xylol als Schleppmittel zu einem kettengeregeltem Polyphenylensulfon umgesetzt, das im folgenden wie unten beschrieben mit gasförmigem Methylchlorid methyliert wurde. Die Rührerdrehzahl wurde in allen Phasen der Polymerherstellung auf 300 UPM eingestellt. Zunächst wurde das entstehende Wasser während 150 Minuten bei einer Temperatur von 190°C mit dem Schleppmittel aus dem Reaktionsgemisch entfernt. Ein Grossteil des Schleppmittels wurde dabei über den Wasserabscheider in den Autoklaven zurückgeführt. Dieser Vorgang wird im Folgenden als "Entwässerung" bezeichnet. Am Ende dieses Prozessschritts wurde eine für die Messung der Viskositätszahl ausreichende Probe der Polymerlösung abgepresst (Probe 1). Danach wurde das überschüssige technische Xylol innerhalb von 70 Minuten bei 185-200°C abdestilliert und am Ende der Destillation eine Probe entnommen (Probe 2). Dieser Prozessschritt wird im Folgenden als "Schleppmitteldestillation" bezeichnet. Schliesslich wurde bei einer Temperatur von 190°C für 60 Minuten Methylchlorid übergeleitet und danach wieder eine Probe abgepresst (Probe 3). Dieser Prozessschritt wird im Folgenden als "Methylierung" bezeichnet. Die drei Proben wurden nach der oben beschriebenen Prozedur aufbereitet. Die Messung der Viskositätszahl (VZ) jeder der drei Proben nach der oben angegebenen Methode ergab folgende Werte.

|  | VZ [ml/g] |
|---|---|
| Probe 1: | 59 |
| Probe 2: | 76 |
| Probe 3: | 78 |

Die für die Polymerherstellung insgesamt benötigte Zeit betrug 280 Minuten. Unter dieser Zeit wird - sofern im folgenden nicht abweichend definiert - die Summe aus den oben genannten Prozessschritten "Entwässerung", "Schleppmitteldestillation" und "Methylierung" verstanden, sie wird im Folgenden als Prozessdauer bezeichnet. Bei einigen Beispielen und Vergleichsbeispielen wurden nicht alle Prozessschritte ausgeführt oder der Schritt "Methylierung" wurde abweichend von der obenstehenden Vorschrift durchgeführt, die Prozessdauer und die Durchführung des Schritts "Methylierung" wurde in den betreffenden Beispielen und Vergleichsbeispielen speziell definiert.

Zur Prüfung der Polymerstabilität wurde die nach der Entnahme der drei Proben verbliebene salzhaltige PPSU-Lösung auf 175°C abgekühlt und unter weiterem überleiten von Inertgas bei reduzierter Drehzahl (60 UPM) gerührt. Nach 24 h, 48 h und 72 h wurden Proben (A-C) abgepresst nach der oben beschriebenen Methode aufgearbeitet und die Viskositätszahl des so erhaltenen PPSU nach der oben angegebenen Methode bestimmt. Folgende Ergebnisse wurden erhalten:

|  | VZ [ml/g] |
|---|---|
| Probe A: | 78 |
| Probe B: | 78 |
| Probe C: | 78 |

Von Probe C wurde wie oben beschrieben die Glasübergangstemperatur bestimmt. Diese betrug 227°C (Onset: 225°C).

**Vergleichsbeispiel 1 (V$\beta$-1**, äquimolarer Einsatz der Komponenten A und B, kein Kettenregler, technisches Xylol als Schleppmittel)

Auf die gleiche Weise wie unter Beispiel 1 beschrieben, wurden mit Ausnahme von 4-Phenylphenol, die gleichen Mengen der dort angegebenen Komponenten zu einem Polyphenylensulfon umgesetzt, als Schleppmittel wurden ebenfalls 90 g technisches Xylol verwendet. Der Prozessschritt Methylierung wurde nicht ausgeführt. Die einzelnen Prozessschritte wurden unter den folgenden Bedingungen durchgeführt. Nach der Entwässerung und nach der Schleppmitteldestillation wurden Proben entnommen und wie oben beschrieben aufgearbeitet (Proben 1 und 2).

Entwässerung:

Dauer: 150 Minuten / Temperatur: 190°C (Probe 1)

Schleppmitteldestillation:

Dauer: 65 Minuten / Temperatur: 185-200°C (Probe 2)

Die Messung der Viskositätszahl (VZ) der Proben nach der oben beschriebenen Methode ergab folgende Werte:

|  | VZ [ml/g] |
|---|---|
| Probe 1: | 85 |
| Probe 2: | 93 |

Die Prozessdauer (Summe der aufgewendeten Zeit für die Entwässerung und Schleppmitteldestillation) betrug 215 Minuten.

Die Prüfung der Polymerstabilität wurde in diesem Fall nicht durchgeführt, da die Viskositätszahl des nach der Polykondensation erhaltenen Polymers schon für praktische Anwendungen unbrauchbar hoch war.

**Vergleichsbeispiel 2 (VB-2,** Einsatz eines Überschusses der Dihydroxyarylkomponente, kein Kettenregler, Xylol als Schleppmittel und Methylierung)

Auf die gleiche Weise wie unter Beispiel 1 beschrieben, wurden 127.3 g (0.684 mol) 4,4'-Dihydroxybiphenyl und 192.1 g (0.669 mol) 4,4'-Dichlordiphenylsulfon (Molverhältnis DHDP:DCDPS = 1.022:1.000) in 695 ml NMP gelöst und unter Einwirkung von 95.27 g (0.6893 mol) dispergiertem, besonders feinteiligem Kaliumcarbonat in Gegenwart von 90 g technischem Xylol als Schleppmittel zu einem Polyphenylensulfon umgesetzt. Die einzelnen Schritte der Polymerherstellung wurden unter den folgenden Bedingungen durchgeführt. Nach der Entwässerung (Probe 1), am Ende der 1. Methylierung (Probe 2) und am Ende der 2. Methylierung (Probe 3) wurden Proben entnommen und nach der oben angegebenen Methode aufgearbeitet. Die beiden Methylierungsschritte erfolgten jeweils durch dreimaliges Aufpressen von Methylchlorid, wobei sich im Autoklaven Drücke von maximal 3-4 bar einstellten.

Entwässerung:

Dauer: 120 Minuten / Temperatur: 190°C (Probe 1)

1. Methylierung:

Dauer: 30 Minuten / Temperatur: 185°C (Probe 2)

Schleppmitteldestillation:

Dauer: 85 Minuten / Temperatur: 185-200°C

2. Methylierung:

Dauer: 30 Minuten /Temperatur: 185°C (Probe 3)

Die Prozessdauer (Summe aus dem Zeitaufwand für die Prozessschritte Entwässerung, 1. Methylierung, Schleppmitteldestillation und 2. Methylierung) betrug 265 Minuten.

Die Bestimmung der Viskositätszahl nach der oben angegebenen Methode ergab folgende Werte:

|  | VZ [ml/g] |
|---|---|
| Probe 1: | 62 |
| Probe 2: | 63.5 |
| Probe 3: | 65 |

Zur Prüfung der Polymerstabilität wurde die nach der Entnahme der drei Proben verbliebene salzhaltige PPSU-Lösung auf 175°C abgekühlt und unter weiterem Überleiten von Inertgas bei reduzierter Drehzahl (60 UPM) gerührt. Nach 24 h und 72 h wurden Proben abgepresst und wie oben angegeben aufgearbeitet und analysiert.

|  | VZ [ml/g] |
|---|---|
| Probe A (24 h): | 65 |
| Probe B (72 h): | 62.5 |

Die Werte für die Viskositätszahl blieben stabil.

Von Probe B wurde wie oben beschrieben die Glasübergangstemperatur bestimmt. Diese betrug 223°C (Onset: 221°C).

**Vergleichsbeispiel 3 (VB-3,** Einsatz eines Überschusses der Dichlordiarylsulfonkomponente, kein Kettenregler und technisches Xylol als Schleppmittel)

Auf die gleiche Weise wie unter Beispiel 1 beschrieben, wurden 127.3 g (0.684 mol) 4,4'-Dihydroxybiphenyl und 202.7 g (0.706 mol) 4,4'-Dichlordiphenylsulfon (Molverhältnis DHDP:DCDPS = 0.969:1.000) in 695 ml NMP gelöst und unter Einwirkung von 98.55 g (0.7131 mol) dispergiertem, besonders feinteiligem Kaliumcarbonat in Gegenwart von 90 g technischem Xylol als Schleppmittel zu einem Polyphenylensulfon umgesetzt. Da es sich hierbei um ein PPSU mit einem hohen Überschuss an Chlorphenyl-Endgruppen handelt, wurde keine Methylierung durchgeführt. Die Prozessschritte Entwässerung und Schleppmitteldestillation wurden unter den folgenden Bedingungen durchgeführt:

Entwässerung:

Dauer: 280 Minuten / Temperatur: 190°C

Schleppmitteldestillation:

Dauer: 25 Minuten / Temperatur: 190-200°C

Die nach der Schleppmitteldestillation abgepresste Probe (Probe 1) wurde wie oben beschrieben aufgearbeitet und die Viskositätszahl (VZ) nach der oben angegebenen Methode bestimmt.

|  | VZ [ml/g] |
|---|---|
| Probe 1 (nach Schleppmitteldestillation) | 63.5 |

Die Prozessdauer (Summe aus der aufgewendeten Zeit für die Entwässerung und die Schleppmitteldestillation) betrug 305 Minuten.

Zur Prüfung der Polymerstabilität wurde die nach der Entnahme der drei Proben verbliebene salzhaltige PPSU-Lösung auf 175°C abgekühlt und unter weiterem Überleiten von Inertgas bei reduzierter Drehzahl (60 UPM) gerührt. Nach 24 h, 48 h und 72 h wurden die Proben A-C abgepresst, nach der oben beschriebenen Methode aufgearbeitet und die Viskositätszahl wie oben angegeben gemessen. Folgende Ergebnisse wurden erhalten:

|  | VZ [ml/g] |
|---|---|
| Probe A (24 h): | 71 |
| Probe B (48 h): | 82.5 |
| Probe C (72 h): | 93.5 |

Wie die Messwerte zeigen, stieg die Viskosität mit zunehmender Verweilzeit im Reaktor stark an. Die Filtration der Proben konnte in Folge der höheren Viskositätszahl erst nach ihrer Verdünnung mit der bis zu dreifachen NMP-Menge bewerkstelligt werden.

**Vergleichsbeispiel 4 (VB-4,** Einsatz eines Überschusses der Dichlordiarylsulfonkomponente, kein Kettenregler, technisches Xylol als Schleppmittel und Methylierung)

Auf die gleiche Weise wie unter Beispiel 1 beschrieben, wurden 127.3 g (0.684 mol) 4,4'-Dihydroxybiphenyl und 202.7 g (0.706 mol) 4,4'-Dichlordiphenylsulfon (Molverhältnis DHDP:DCDPS = 0.969:1.000) in 695 ml NMP gelöst und unter Einwirkung von 98.55 g (0.7131 mol) dispergiertem, besonders feinteiligem Kaliumcarbonat in Gegenwart von 90 g technischem Xylol als Schleppmittel zu einem Polyphenylensulfon umgesetzt. Ausserdem wurde die Methylierung in 2 Schritten analog Vergleichsbeispiel 3 durchgeführt. Die Prozessschritte Entwässerung, 1. Methylierung, Schleppmitteldestillation und 2. Methylierung wurden unter den folgenden Bedingungen durchgeführt:

Entwässerung:

Dauer: 280 Minuten / Temperatur: 190°C (Probe 1)

1. Methylierung:

Dauer: 30 Minuten / Temperatur: 185°C (Probe 2)

Schleppmitteldestillation:

Dauer: 30 Minuten / Temperatur: 185-200°C

2. Methylierung:

Dauer: 30 Minuten / Temperatur: 185°C (Probe 3)

Die nach der Schleppmitteldestillation abgepresste Probe (Probe 1) wurde wie oben beschrieben aufgearbeitet und die Viskositätszahl (VZ) nach der oben angegebenen Methode bestimmt.

|  | VZ [ml/g] |
|---|---|
| Probe 1: | 64 |

Die Prozessdauer (Summe aus der aufgewendeten Zeit für die Entwässerung, die Schleppmitteldestillation und die beiden Methylierungsschritte) betrug 370 Minuten.

Zur Prüfung der Polymerstabilität wurde die nach der Entnahme der drei Proben verbliebene salzhaltige PPSU-Lösung auf 175°C abgekühlt und unter weiterem Überleiten von Inertgas bei reduzierter Drehzahl (60 UPM) gerührt. Nach 24 h, 48 h und 72 h wurden die Proben A-C abgepresst, nach der oben beschriebenen Methode aufgearbeitet und die Viskositätszahl wie oben angegeben gemessen. Folgende Ergebnisse wurden erhalten:

|  | VZ [ml/g] |
|---|---|
| Probe A (24 h): | 69 |
| Probe B (48 h): | 78.5 |
| Probe C (72 h): | 87 |

Wie die Messwerte zeigen, stieg die Viskosität auch nach durchgeführter Methylierung mit zunehmender Verweilzeit im Reaktor stark an. Die Filtration der Proben konnte in Folge der höheren Viskositätszahl erst nach ihrer Verdünnung mit der bis zu dreifachen NMP-Menge bewerkstelligt werden.

**Vergleichsbeispiel 5 (VB-5,** äquimolarer Einsatz der Komponenten A und B, 4-Phenylphenol als Kettenregler, Toluol als Schleppmittel und Methylierung)

Auf die gleiche Weise wie unter Beispiel 1 beschrieben, wurden die gleichen Mengen der dort angegebenen Komponenten zu einem Polyphenylensulfon umgesetzt, als Schleppmittel wurden aber 90 g Toluol verwendet. Der Prozessschritt Methylierung wurde ebenfalls wie in Beispiel 1 beschrieben ausgeführt. Die einzelnen Prozessschritte wurden unter den folgenden Bedingungen durchgeführt. Nach der Entwässerung, nach der Methylierung und nach der Schleppmitteidestillation wurden Proben entnommen und wie oben beschrieben aufgearbeitet (Proben 1 bis 3).

Entwässerung:

Dauer: 150 Minuten / Temperatur: 190°C (Probe 1)

Schleppmitteldestillation:

Dauer: 75 Minuten / Temperatur: 185-200°C (Probe 2)

Methylierung:

Dauer: 60 Minuten / Temperatur: 190°C (Probe 3)

Die Messung der Viskositätszahl (VZ) der Proben nach der oben beschriebenen Methode ergab folgende Werte:

|  | VZ [ml/g] |
|---|---|
| Probe 1: | 30 |
| Probe 2: | 32 |
| Probe 3: | 34 |

Die Prozessdauer betrug 285 Minuten.
Das erhaltene Sulfon wies eher Oligomer- als Polymercharakter auf, weshalb keine Stabilitätsprüfung durchgeführt wurde.

**Beispiel 2 (B-2,** äquimolarer Einsatz der Komponenten A und B, 4-Phenylphenol als Kettenregler, kein Schleppmittel und Methylierung)

Auf die gleiche Weise wie unter Beispiel 1 beschrieben, wurden die gleichen Mengen der dort angegebenen Komponenten zu einem Polyphenylensulfon umgesetzt, diesmal aber ohne Schleppmittel. Das bei der Polykondensation entstehende Wasser wurde hierbei innerhalb von 6 Stunden direkt aus dem Reaktor abdestilliert. Der Wasserdampf wurde dabei über eine auf 110-120°C beheizte Leitung zu einem Rückflusskühler mit Wasserabscheider geleitet. Die einzelnen Prozessschritte wurden unter den folgenden Bedingungen durchgeführt.

| Entwässerung: | Dauer: 360 Minuten / Temperatur: 195°C |
|---|---|
| Methylierung: | Dauer: 60 Minuten /Temperatur: 195°C |

Nach der Methylierung wurde eine Probe (Probe 1) genommen, nach der oben beschriebenen Methode aufgearbeitet und die Viskositätszahl nach der oben angegebenen Methode bestimmt. Folgende Viskositätszahl wurde gemessen:

|  | VZ [ml/g] |
|---|---|
| Probe 1: | 79 |

Die Prozessdauer (Summe aus der benötigten Zeit für die Entwässerung und die Methlyierung) betrug 420 Minuten.

Zur Prüfung der Polymerstabilität wurde die nach der Entnahme der Probe verbliebene salzhaltige PPSU-Lösung auf 175°C abgekühlt und unter weiterem Überleiten von Inertgas bei reduzierter Drehzahl gerührt. Nach 24 h, 48 h und 72 h wurden Proben (A-C) abgepresst, nach der oben beschriebenen Methode aufgearbeitet und die Viskositätszahl des so erhaltenen PPSU nach der oben angegebenen Methode gemessen. Folgende Ergebnisse wurden erhalten:

|  | VZ [ml/g] |
|---|---|
| Probe A: | 79 |
| Probe B: | 79 |
| Probe C: | 79 |

Die Prozessdauer liegt mit 420 Minuten zwar deutlich höher, als wenn technisches Xylol als Schleppmittel eingesetzt wird. Allerdings wird auch ohne Verwendung eines Schleppmittels ein Polysulfon mit einer Viskositätszahl im für Anwendungen geeigneten Bereich erhalten.

**Vergleichsbeispiel 6** (**VB-6**, äquimolarer Einsatz der Komponenten A und B, 4-Chlordiphenylsulfon als Kettenregler, technisches Xylol als Schleppmittel und Methylierung)

Auf die gleiche Weise wie unter Beispiel 1 beschrieben, wurden mit Ausnahme von 4-Phenylphenol, die gleichen Mengen der dort angegebenen Komponenten zu einem Polyphenylensulfon umgesetzt, als Schleppmittel wurden ebenfalls 90 g technisches Xylol verwendet. Statt des 4-Phenylphenols wurden 3.46 g (0.0137 mol) 4-Chlordiphenylsulfon verwendet. Der Prozessschritt Methylierung wurde auf Grund der stark reduzierten Hydroxyendgruppen nicht ausgeführt. Die einzelnen Prozessschritte wurden unter den folgenden Bedingungen durchgeführt. Nach der Entwässerung und nach der Schleppmitteldestillation wurden Proben entnommen und wie oben beschrieben aufgearbeitet (Proben 1 bis 2).

Entwässerung:

Dauer: 150 Minuten / Temperatur: 190°C (Probe 1)

Schleppmitteldestillation:

Dauer: 75 Minuten / Temperatur: 185-200°C (Probe 2)

Die Prozessdauer betrug 215 Minuten.

Die Messung der Viskositätszahl (VZ) der beiden Proben nach der oben beschriebenen Methode ergab folgende Werte:

|  | VZ [ml/g] |
|---|---|
| Probe 1: | 44 |
| Probe 2: | 60 |

Zur Prüfung der Polymerstabilität wurde die nach der Entnahme der drei Proben verbliebene salzhaltige PPSU-Lösung auf 175°C abgekühlt und unter weiterem Überleiten von Inertgas bei reduzierter Drehzahl gerührt. Nach 24 h, 48 h und 72 h wurden Proben (A-C) abgepresst, nach der oben beschriebenen Methode aufgearbeitet und die Viskositätszahl des so erhaltenen PPSU nach der oben angegebenen Methode gemessen. Folgende Ergebnisse wurden erhalten:

|  | VZ [ml/g] |
|---|---|
| Probe A: | 83 |
| Probe B: | 85 |
| Probe C: | 93 |

Aus Vergleichsbeispiel 7 geht hervor, dass die Verwendung von 4-Chlordiphenylsulfon als Regler zu einem Polysulfon führt, welches im Stabilitätstest bis hin zu Viskositätszahlen aufbaut, die über dem für Anwendungen geeigneten Bereich liegen.

**Tabelle: Übersicht der Ergebnisse**

|  | B-1 | VB-1 | VB-2 | VB-3 | VB-4 | VB-5 | B-2 | VB-6 |
|---|---|---|---|---|---|---|---|---|
| Polymer | PPSU | PPSU | PPSU | PPSU | PPSU | PPSU | PPSU | PPSU |
| Molverhältnis DHBP:DCDPS | 1.000: 1.000 | 1.000: 1.000 | 1.022: 1.000 | 0.969: 1.000 | 0.969: 1.000 | 1.000: 1.000 | 1.000: 1.000 | 1.000: 1.000 |
| Menge 4-Phenylphenol [$\mu$mol/g[a]] | 50 | - | - | - | - | 50 | 50 | - |
| Menge 4-Chlordiphenylsulfon [$\mu$mol/g[a]] | - | - | - | - | - | - | - | 50 |
| Lösungsmittel | NMP | NMP | NMP | NMP | NMP | NMP | NMP | NMP |
| Schleppmittel | Xylol[b] | Xylol[b] | Xylol[b] | Xylol[b] | Xylol[b] | Toluol | - | Xylol[b] |
| Entwässerung [min] | 150 | 150 | 120 | 280 | 280 | 150 | 360 | 150 |
| 1. Methylierung [min] | - | - | 30 | - | 30 | - | 60 | - |
| Schleppmitteldestillation [min] | 70 | 65 | 85 | 25 | 30 | 75 | - | 75 |
| 2. Methylierung [min] | 60 | - | 30 | - | 30 | 60 | - | - |
| Prozessdauer [min] | 280 | 215 | 265 | 305 | 370 | 285 | 420 | 215 |
| Viskositätszahl [ml/g] Herstellung: Probe 1: | 59 | 85 | 62 | 63.5 | 64 | 30 | 79 | 44 |
| Probe 2: | 76 | 93 | 63.5 | - | - | 32 | - | 60 |
| Probe 3: | 78 | - | 65 | - | - | 34 | - | - |
| Stabilitätstest: Probe A: | 78 | - | 65 | 71 | 69 | - | 79 | 83 |
| Probe B: | 78 | - | 62.5 | 82.5 | 78.5 | - | 79 | 85 |
| Probe C: | 78 | - | - | 93.5 | 87 | - | 79 | 93 |
| Glasübergangstemperatur | 227°C | n.b. | 223°C | n.b. | n.b. | n.b. | n.b. | n.b. |
| a) $\mu$mol Regler bezogen auf g entstehendes Polymer; b) technisches Xylol. | | | | | | | | |

**Patentansprüche**

1. Verfahren zur Herstellung von Polysulfonpolymeren bei dem eine Komponente A, enthaltend zumindest eine aromatische Dihydroxyverbindung, ausgewählt aus der Gruppe bestehend aus 4,4'-Dihydroxybiphenyl und/oder Bisphenol S mit einer Komponente B, enthaltend mindestens ein Bis-(halogenaryl)sulfon, bevorzugt 4,4'-Dichlordiphenylsulfon, in Gegenwart einer Base, die mit dem Reaktionsgemisch unter Bildung von Wasser reagiert, umgesetzt wird, wobei
> 0.99 bis < 1.01 Äquivalente der Komponente A bezogen auf 1.0 Äquivalente der Komponente B eingesetzt werden, die Umsetzung in einem Lösungsmittel, umfassend N-alkylierte Pyrrolidone durchgeführt wird,
diesem Reaktionsgemisch von 0 bis 12 Gewichtsprozents von zumindest einem Schleppmittel mit einem Siedepunkt von größer als 130°C zugesetzt wird, und
während und/oder nach der Umsetzung der Komponente A mit Komponente B mindestens ein Regler (Komponente D) zugegeben wird, der ein einwertiges Phenol ist.

2. Verfahren nach Anspruch 1, **dadurch gekennzeichnet, dass** die Komponente D ein einwertiges Phenol mit einem $pK_a$-Wert des phenolischen Protons von <12, bevorzugt <11, besonders bevorzugt <10, ist, wobei das Phenol insbesondere ausgewählt ist aus der Gruppe bestehend aus 4-Phenylphenol, 4-tert-Butylphenol, 4-Tritylphenol, ortho-Kresol, meta-Kresol, para-Kresol, 2,3-Dimethylphenol, 2,4-Dimethylphenol, 2,5-Dimethylphenol, 2,6-Dimethylphenol, 3,4-Dimethylphenol, 3,5- Dimethylphenol, Mesitol, Tymol, para-Amylphenol, ortho-Amylphenol, meta-Amylphenol, para-Isopropylphenol, meta-Isopropylphenol, ortho-Isopropylphenol, para-n-Butylphenol, ortho-n-Butylphenol, meta-n-Butylphenol, para-n-Heptylphenol, para-n-Heptylphenol, meta-n-Heptylphenol, para-n-Octylphenol, ortho-n-Octylphenol, meta-n-Octylphenol, para-n-Nonylphenol, ortho-n-Nonylphenol, meta-n-Nonylphenol, para-n-Dodecylphenol, meta-n-Dodecylphenol, ortho-n-Dodecylphenol, 5-Indanol, 1-Hydroxynaphthalin und/oder 2-Hydroxynaphthalin.

3. Verfahren nach einem der vorhergehenden Ansprüche, **dadurch gekennzeichnet, dass** die Komponente D, bezogen auf die Gewichtssumme des entstehenden Polymers zu 30-90 μmol/g, bevorzugt zu 45-70 μmol/g, besonders bevorzugt zu 40-60 μmol/g eingesetzt wird.

4. Verfahren nach einem der vorhergehenden Ansprüche, **dadurch gekennzeichnet, dass** während und/oder nach der Umsetzung der Komponente A mit Komponente B eine teilweise oder vollständige Entwässerung des Reaktionsgemisches erfolgt, vorzugsweise durch Destillation des aus Wasser und dem Schleppmittel gebildeten Azeotrops.

5. Verfahren nach einem der vorhergehenden Ansprüche, wobei das Schleppmittel in einer Menge von 4 bis 12 Gewichtsprozent, bevorzugt 5 bis 10 Gewichtsprozent und besonders bevorzugt 6 bis 9 Gewichtsprozent, bezogen auf das Gesamtgewicht aller Komponenten des Reaktionsgemisches eingesetzt wird.

6. Verfahren nach einem der vorhergehenden Ansprüche, wobei das Schleppmittel mit einem Siedepunkt von grösser als 130°C ausgewählt ist aus der Gruppe bestehend aus Alkylaromaten, bevorzugt Alkylbenzolen, insbesondere ortho-Xylol, meta-Xylol, para-Xylol, Mischungen der Xylolisomere, technischem Xylol, Ethylbenzol, Isopropylbenzol, 1,3,5-Trimethylbenzol; 1,2,4-Trimethylbenzol und/oder Mischungen daraus, wobei technisches Xylol besonders bevorzugt ist.

7. Verfahren nach einem der vorhergehenden Ansprüche, **dadurch gekennzeichnet, dass** > 0.995 bis < 1.005, bevorzugt > 0.999 bis < 1.001 Äquivalente der Komponente A bezogen auf 1.0 Äquivalente der Komponente B, insbesondere äquimolare Mengen an Komponente A und Komponente B eingesetzt werden.

8. Verfahren nach einem der vorhergehenden Ansprüche, wobei während und/oder nach der Umsetzung der Komponente A und B mindestens einmal eine Komponente C, die eine aliphatische Monochlorverbindung, bevorzugt Methylchlorid ist, zum Reakti-onsgemisch zugeben und umgesetzt wird (Alkylierung).

9. Verfahren nach einem der vorhergehenden Ansprüche, **dadurch gekennzeichnet, dass** vor der Zugabe und Umsetzung der Komponente C und/oder der Komponente D zumindest ein Teil oder die Gesamtheit des gebildeten Wassers aus dem Reaktionsgemisch entfernt wird (Entwässerung) und/oder nach der Umsetzung der Komponente C und/oder der Komponente D eine vollständige Entfernung des Schleppmittels aus dem Reaktionsgemisch erfolgt (Schleppmitteldestillation).

**10.** Verfahren nach einem der vorhergehenden Ansprüche, wobei die Base ausgewählt ist aus der Gruppe bestehend aus Alkali- oder Erdalkalihydrogencarbonaten, Alkali- oder Erdalkalicarbonaten oder Mischungen der zuvor genannten Verbindungen, insbesondere Natriumcarbonat, Kaliumcarbonat und/oder Calciumcarbonat.

**11.** Verfahren nach einem der vorhergehenden Ansprüche, wobei 1.0 bis 1.5 Äquivalente der Base, bevorzugt 1.005 bis 1.1 Äquivalente der Base und insbesondere bevorzugt 1.008 bis 1.05 Äquivalente der Base bezogen auf 1.0 Äquivalente von Komponente A verwendet werden.

**12.** Verfahren nach einem der vorhergehenden Ansprüche, wobei die Umsetzung von Komponente A mit Komponente B unter einer Inertgasatmosphäre, bevorzugt ausgewählt aus der Gruppe bestehend aus einer Argon- und/oder einer Stickstoffatmosphäre, die weniger als 100 ppm, vorzugsweise weniger als 10 ppm, insbesondere weniger als 1 ppm Sauerstoff enthält, durchgeführt wird.

**13.** Verfahren nach einem der vorhergehenden Ansprüche, wobei die Summe aus 4,4'-Dihydroxybiphenyl und/oder Bisphenol S mindestens 50 Gewichtsprozent der Komponente A ausmacht.

**14.** Verfahren nach einem der vorhergehenden Ansprüche, wobei Komponente A 4,4'-Dihydroxybiphenyl oder 4,4'-Bisphenol S ist.

**15.** Verfahren nach einem der vorhergehenden Ansprüche, wobei die Prozessdauer, worunter die Gesamtdauer für die Schritte Entwässerung, Schleppmitteldestillation und Alkylierung verstanden wird,

a) unter 400 Minuten, vorzugsweise unter 350 Minuten und besonders bevorzugt unter 310 Minuten liegt, wobei bevorzugt die alleinige Verwendung von Bisphenol S als Komponente A, ausgeschlossen ist, oder
b) unter 450 Minuten, vorzugsweise unter 410 Minuten und besonders bevorzugt unter 380 Minuten liegt.

**16.** Polysulfonpolymer, herstellbar nach einem Verfahren nach einem der vorhergehenden Ansprüche.

**17.** Polysulfonpolymer nach vorhergehendem Anspruch, **gekennzeichnet durch** eine Glasübergangstemperatur (Tg, gemessen gemäß ISO 11357 Teil 1 und 2) von mehr als 223°C, bevorzugt mehr als 225°C, besonders bevorzugt von 225°C bis 230°C.

**18.** Thermoplastische Formmasse, enthaltend mindestens ein Polysulfonpolymer nach einem der beiden vorhergehenden Ansprüche.

**19.** Formkörper, hergestellt aus einer thermoplastischen Formmasse nach vorhergehendem Anspruch, insbesondere in Form von Fasern, Filmen, Membranen oder Schäumen.

**20.** Verwendung eines Polysulfonpolymers nach einem der Ansprüche 16 bis 17 oder einer thermoplastischen Formmasse nach Anspruch 18 zur Herstellung von Formkörpern, Fasern, Filmen, Membranen oder Schäumen.

**Claims**

**1.** Method for producing polysulfone polymers in which a component A comprising at least one aromatic dihydroxy compound chosen from the group consisting of 4,4'-dihydroxybiphenyl and/or bisphenol S is reacted with a component B comprising at least one bis(haloaryl) sulfone, preferably 4,4'-dichlorodiphenyl sulfone, in the presence of a base which reacts with the reaction mixture to form water, wherein
> 0.99 to < 1.01 equivalents of component A, based on 1.0 equivalent of component B, are employed, the reaction is carried out in a solvent comprising N-alkylated pyrrolidones,
from 0 to 12 per cent by weight of at least one entraining agent having a boiling point of greater than 130 °C is added to this reaction mixture, and
during and/or after the reaction of component A with component B at least one regulator (component D) which is a monofunctional phenol is added.

**2.** Method according to claim 1, **characterized in that** component D is a monofunctional phenol having a $pK_a$ value of the phenolic proton of < 12, preferably < 11, particularly preferably < 10, wherein the phenol in particular is chosen from the group consisting of 4-phenylphenol, 4-tert-butylphenol, 4-tritylphenol, ortho-cresol, meta-cresol, paracresol, 2,3-dimethylphenol, 2,4-dimethylphenol, 2,5-dimethylphenol, 2,6-dimethylphenol, 3,4-dimethylphenol, 3,5-dimethylphenol, mesitol, tymol, para-amylphenol, ortho-amylphenol, meta-amylphenol, para-isopropylphenol, meta-isopropylphenol, ortho-isopropylphenol, para-n-butylphenol, ortho-n-butylphenol, meta-n-butylphenol, para-n-heptylphenol, para-n-heptylphenol, meta-n-heptylphenol, para-n-octylphenol, ortho-n-octylphenol, meta-n-octylphenol, para-n-nonylphenol, ortho-n-nonylphenol, meta-n-nonylphenol, para-n-dodecylphenol, meta-n-dodecylphenol, ortho-n-dodecylphenol, 5-indanol, 1-hydroxynaphthalene and/or 2-hydroxynaphthalene.

3. Method according to one of the preceding claims, **characterized in that** component D is employed to the extent of 30 - 90 $\mu$mol/g, preferably to the extent of 45 - 70 $\mu$mol/g, particularly preferably to the extent of 40 - 60 $\mu$mol/g, based on the total weight of the polymer formed.

4. Method according to one of the preceding claims, **characterized in that** during and/or after the reaction of component A with component B, a partial or complete dewatering of the reaction mixture is carried out, preferably by distillation of the azeotrope formed from water and the entraining agent.

5. Method according to one of the preceding claims, wherein the entraining agent is employed in an amount of from 4 to 12 per cent by weight, preferably 5 to 10 per cent by weight and particularly preferably 6 to 9 per cent by weight, based on the total weight of all the components of the reaction mixture.

6. Method according to one of the preceding claims, wherein the entraining agent having a boiling point of greater than 130 °C is chosen from the group consisting of alkylaromatics, preferably alkylbenzenes, in particular ortho-xylene, meta-xylene, para-xylene, mixtures of the xylene isomers, technical grade xylene, ethylbenzene, isopropylbenzene, 1,3,5-trimethylbenzene; 1,2,4-trimethylbenzene and/or mixtures thereof, technical grade xylene being particularly preferred.

7. Method according to one of the preceding claims, **characterized in that** > 0.995 to < 1.005, preferably > 0.999 to < 1.001 equivalents of component A, based on 1.0 equivalent of component B, in particular equimolar amounts of component A and component B are employed.

8. Method according to one of the preceding claims, wherein during and/or after the reaction of components A and B, a component C which is an aliphatic monochloro compound, preferably methyl chloride, is added at least once to the reaction mixture and reacted (alkylation).

9. Method according to one of the preceding claims, **characterized in that** before the addition and reaction of component C and/or component D, at least a part of or the entire water formed is removed from the reaction mixture (dewatering) and/or after the reaction of component C and/or component D a complete removal of the entraining agent from the reaction mixture is carried out (distillation of the entraining agent.

10. Method according to one of the preceding claims, wherein the base is chosen from the group consisting of alkali metal or alkaline earth metal bicarbonates, alkali metal or alkaline earth metal carbonates or mixtures of the abovementioned compounds, in particular sodium carbonate, potassium carbonate and/or calcium carbonate.

11. Method according to one of the preceding claims, wherein 1.0 to 1.5 equivalents of the base, preferably 1.005 to 1.1 equivalents of the base and particularly preferably 1.008 to 1.05 equivalents of the base, based on 1,0 equivalent of component A, are used.

12. Method according to one of the preceding claims, wherein the reaction of component A with component B is carried out under an inert gas atmosphere, preferably chosen from the group consisting of an argon and/or a nitrogen atmosphere which comprises less than 100 ppm, preferably less than 10 ppm, in particular less than 1 ppm of oxygen.

13. Method according to one of the preceding claims, wherein the sum of 4,4'-dihydroxybiphenyl and/or bisphenol S makes up at least 50 per cent by weight of component A.

14. Method according to one of the preceding claims, wherein component A is 4,4'-dihydroxybiphenyl or 4,4'-bisphenol S.

15. Method according to one of the preceding claims, wherein the duration of the process, by which is understood the total duration for the steps of dewatering, distillation of the entraining agent and alkylation,

a) is less than 400 minutes, preferably less than 350 minutes and particularly preferably less than 310 minutes, preferably the sole use of bisphenol S as component A being ruled out, or

b) is less than 450 minutes, preferably less than 410 minutes and particularly preferably less than 380 minutes.

16. Polysulfone polymer which can be produced by a method according to one of the preceding claims.

17. Polysulfone polymer according to the preceding claim, **characterized by** a glass transition temperature (Tg, measured in accordance with ISO 11357 Part 1 and 2) of more than 223 °C, preferably more than 225 °C, particularly preferably of from 225 °C to 230 °C.

18. Thermoplastic moulding composition comprising at least one polysulfone polymer according to one of the two preceding claims.

19. Shaped body produced from a thermoplastic moulding composition according to the preceding claim, in particular in the form of fibres, films, membranes or foams.

20. Use of a polysulfone polymer according to one of claims 16 to 17 or of a thermoplastic moulding composition according to claim 18 for the production of shaped bodies, fibres, films, membranes or foams.

**Revendications**

1. Procédé de préparation de polymères polysulfones, dans lequel un composant A, contenant au moins un composé aromatique dihydroxylé choisi dans le groupe consistant en le 4,4'-dihydroxybiphényle et/ou le bisphénol S est mis à réagir avec un composant B, contenant au moins une bis(halogénaryl)sulfone, de préférence la 4,4'-dichlorodiphénylsulfone, en présence d'une base qui réagit avec le mélange réactionnel avec formation d'eau, dans lequel on utilise > 0,99 à < 1,01 équivalent du composant A pour 1,0 équivalent du composant B, on met en oeuvre la réaction dans un solvant comprenant des pyrrolidones N-alkylées,
on ajoute à ce mélange réactionnel 0 à 12 % en poids d'au moins un agent d'entraînement ayant un point d'ébullition supérieur à 130°C, et
pendant et/ou après la réaction du composant A avec le composant B, on ajoute au moins un régulateur (composant D) qui est un phénol monovalent.

2. Procédé selon la revendication 1, **caractérisé en ce que** le composant D est un phénol monovalent ayant une valeur $pK_a$ du proton phénolique < 12, de préférence < 11, d'une manière particulièrement préférée < 10, dans lequel le phénol est en particulier choisi dans le groupe consistant en le 4-phénylphénol, le 4-tert-butylphénol, le 4-tritylphénol, l'ortho-crésol, le méta-crésol, le para-crésol, le 2,3-diméthylphénol, le 2,4-diméthylphénol, le 2,5-diméthylphénol, le 2,6-diméthylphénol, le 3,4-diméthylphénol, le 3,5-diméthylphénol, le mésitol, le tymol, le para-amylphénol, l'ortho-amylphénol, le méta-amylphénol, le para-isopropylphénol, le méta-isopropylphénol, l'ortho-isopropylphénol, le para-n-butylphénol, l'ortho-n-butylphénol, le méta-n-butylphénol, le para-n-heptylphénol, le para-n-heptylphénol, le méta-n-heptylphénol, le para-n-octylphénol, l'ortho-n-octylphénol, le méta-n-octylphénol, le para-n-nonylphénol, l'ortho-n-nonylphénol, le méta-n-nonylphénol, le para-n-dodécylphénol, le méta-n-dodécylphénol, l'ortho-n-dodécylphénol, le 5-indanol, le 1-hydroxynaphtalène et/ou le 2-hydroxynaphtalène.

3. Procédé selon l'une des revendications précédentes, **caractérisé en ce qu'**on utilise le composant D en une quantité, rapportée au poids total du polymère obtenu, de 30-90 μmol/g, de préférence de 45-70 μmol/g, d'une manière particulièrement préférée de 40-60 μmol/g.

4. Procédé selon l'une des revendications précédentes, **caractérisé en ce que**, pendant et/ou après la réaction du composant A avec le composant B, on procède à une déshydratation partielle ou complète du mélange réactionnel, de préférence par distillation de l'azéotrope formé à partir de l'eau et de l'agent d'entraînement.

5. Procédé selon l'une des revendications précédentes, dans lequel l'agent d'entraînement est utilisé en une quantité de 4 à 12 % en poids, de préférence de 5 à 10 % en poids et d'une manière particulièrement préférée de 6 à 9 % en poids, par rapport au poids total de l'ensemble des composants du mélange réactionnel.

6. Procédé selon l'une des revendications précédentes, dans lequel l'agent d'entraînement, ayant un point d'ébullition supérieur à 130°C, est choisi dans le groupe consistant en les composés alkylaromatiques, de préférence les alkylbenzènes, en particulier l'ortho-xylène, le méta-xylène, le para-xylène, les mélanges des isomères du xylène, le xylène technique, l'éthylbenzène, l'isopropylbenzène, le 1,3,5-triméthylbenzène ; le 1,2,4-triméthylbenzène et/ou les mélanges de ceux-ci, le xylène technique étant particulièrement préféré.

7. Procédé selon l'une des revendications précédentes, **caractérisé en ce qu'**on utilise une quantité > 0,995 à < 1,005, de préférence > 0,999 à < 1,001 équivalent du composant A, pour 1,0 équivalent du composant B, en particulier des quantités équimolaires du composant A et du composant B.

8. Procédé selon l'une des revendications précédentes, dans lequel, pendant et/ou après la réaction des composants A et B, on ajoute au mélange réactionnel et on fait réagir (alkylation) au moins une fois un composant C, qui est un composé monochloré aliphatique, de préférence le chlorure de méthyle.

9. Procédé selon l'une des revendications précédentes, **caractérisé en ce que**, avant l'addition et la réaction du composant C et/ou du composant D, on élimine du mélange réactionnel (déshydratation) au moins une partie ou la totalité de l'eau formée, et/ou, après la réaction du composant C et/ou du composant D, on procède à une élimination complète de l'agent d'entraînement du mélange réactionnel (distillation de l'agent d'entraînement).

10. Procédé selon l'une des revendications précédentes, dans lequel la base est choisie dans le groupe consistant en les hydrogénocarbonates alcalins ou alcalino-terreux, les carbonates alcalins ou alcalino-terreux ou les mélanges des composés mentionnés ci-dessus, en particulier le carbonate de sodium, le carbonate de potassium et/ou le carbonate de calcium.

11. Procédé selon l'une des revendications précédentes, dans lequel on utilise 1,0 à 1,5 équivalent de la base, de préférence 1,005 à 1,1 équivalent de la base et d'une manière particulièrement préférée 1,008 à 1,05 équivalent de la base, pour 1,0 équivalent du composant A.

12. Procédé selon l'une des revendications précédentes, dans lequel la réaction du composant A avec le composant B est mise en oeuvre sous une atmosphère d'un gaz inerte, choisie de préférence dans le groupe consistant en une atmosphère d'argon et/ou une atmosphère d'azote, qui contient moins de 100 ppm, de préférence moins de 10 ppm, en particulier moins de 1 ppm d'oxygène.

13. Procédé selon l'une des revendications précédentes, dans lequel la somme du 4,4'-dihydroxybiphényle et/ou du bisphénol S représente au moins 50 % en poids du composant A.

14. Procédé selon l'une des revendications précédentes, dans lequel le composant A est le 4,4'-dihydroxybiphényle ou le 4,4'-bisphénol S.

15. Procédé selon l'une des revendications précédentes, dans lequel la durée du procédé, ce par quoi on entend la durée totale des étapes déshydratation, distillation de l'agent d'entraînement et alkylation,

   a) est inférieure à 400 minutes, de préférence inférieure à 350 minutes et d'une manière particulièrement préférée inférieure à 310 minutes, de préférence l'utilisation unique de bisphénol S en tant que composant A étant exclue, ou
   b) est inférieure à 450 minutes, de préférence inférieure à 410 minutes et d'une manière particulièrement préférée inférieure à 380 minutes.

16. Polymère polysulfone pouvant être préparé par un procédé selon l'une des revendications précédentes.

17. Polymère polysulfone selon la revendication précédente, **caractérisé par** une température de transition vitreuse (Tg, mesurée selon ISO 11 357 parties 1 et 2) supérieure à 223°C, de préférence supérieure à 225°C, d'une manière particulièrement préférée de 225 à 230°C.

18. Mélange à mouler thermoplastique, contenant au moins un polymère polysulfone selon l'une des deux revendications précédentes.

19. Objet moulé, fabriqué à partir d'un mélange à mouler thermoplastique selon la revendication précédente, en particulier sous forme de fibres, de films, de membranes ou de mousses.

**20.** Utilisation d'un polymère polysulfone selon l'une des revendications 16 à 17 ou d'un mélange à mouler thermoplastique selon la revendication 18 pour fabriquer des objets moulés, des fibres, des films, des membranes ou des mousses.

**Figur 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010112508 A1
- EP 0135130 A2
- EP 0347669 A2
- CA 847963 A

**In der Beschreibung aufgeführte Nicht-Patentliteratur**

- Fahrzeugbau, Medizintechnik, Elektronik, Luftfahrt und Membrantechnologie. Eine Übersicht der Verwendungsmöglichkeiten dieser Polymerklasse bietet. **N. INCHAURONDO-NEHM.** Kunstoffe. 2008, 113-116
- Kunststoff Handbuch, Technische Thermoplase. Hochleistungskunststoffe. 1994, vol. 3
- **A.J. WNUK ; T.F. DAVIDSON ; J.E. MCGRAWTH.** Journal of Applied Polymer Science. *Applied Polymer Symposium,* 1978, vol. 34, 89-101